Europäisches Patentamt

European Patent Office

Office européen des brevets

(19)

(11) Veröffentlichungsnummer: **0 207 255 B1**

(12) **EUROPÄISCHE PATENTSCHRIFT**

(45) Veröffentlichungstag der Patentschrift:
16.01.91 Patentblatt 91/03

(51) Int. Cl.⁵: **H04M 3/22, H04Q 3/545**

(21) Anmeldenummer: 86106242.0

(22) Anmeldetag: 07.05.86

(54) **Anordnung zum Bedienen und Warten einer Fernmelde- insbesondere Fernsprechvermittlungsanlage.**

(30) Priorität: 05.07.85 CH 2903/85

(43) Veröffentlichungstag der Anmeldung:
07.01.87 Patentblatt 87/02

(45) Bekanntmachung des Hinweises auf die
Patenterteilung:
16.01.91 Patentblatt 91/03

(84) Benannte Vertragsstaaten:
CH DE FR GB IT LI NL SE

(56) Entgegenhaltungen:
BRITISH TELECOMMUNICATIONS
ENGINEERING, Band 3, Nr. 4, Januar 1985,
Seiten 277-284, London, GB; R.M. BATY et al.:
"System X: maintenance control subsystem"
1982 INTERNATIONAL ZURICH SEMINAR ON
DIGITAL COMMUNICATIONS, Zurich, CH,
9.-11. März 1982, Seiten 269-275, IEEE, New
York, US; M. BENEDETTI et al.: "Toward a new
man-machine interaction in SPC switching
systems"
IEEE TRANSACTIONS ON
COMMUNICATIONS, Band COM-30, Nr. 6, Juni
1982, Seiten 1329-1336, IEEE, New York, US;
B.H. HORNBACH: "MML: CCITT man-machine
language"

(56) Entgegenhaltungen:
PROCEEDINGS OF THE INTERNATIONAL
SWITCHING SYMPOSIUM,
Telecommunication Switching, "Session 33A,
paper 5", Florence, IT, 7.-11. Mai 1984, Seiten
1-6, North-Holland Publ. Co., Amsterdam, NL;
F. PAGEL et al.: "CHILL visibility and separate
compilation meet databases - A development
envelope for large CHILL programs"
IEEE GLOBAL TELECOMMUNICATIONS
CONFERENCE, CONFERENCE RECORD,
Miami, Florida, US, 29. November - 2.
Dezember 1982, Band 3, Seiten E3.4.1-E.3.4.5
(1013-1017), IEEE, New York, US; H. AOYAGI et
al.: "Interactive data generator for centennial
II PABX"

(73) Patentinhaber: SIEMENS-ALBIS
AKTIENGESELLSCHAFT
PV/Patente und Verträge Postfach
CH-8047 Zürich (CH)
CH LI
Patentinhaber: Siemens Aktiengesellschaft
Wittelsbacherplatz 2
D-8000 München 2 (DE)
DE FR GB IT NL SE

(72) Erfinder: Sevcik, Maximilian
Grundfeld
CH-8932 Mettmenstetten (CH)

**Beschreibung**

Die vorliegende Erfindung betrifft eine Anordnung gemäss dem Oberbegriff des Anspruches 1.

Die Bedienungs- und Verwaltungsaufgaben in Fernmeldenetzen beinhalten im wesentlichen das Neueinrichten, Aendern und Erweitern von Systemdaten, wie z.B. der Vermittlungsstellen-, Netz-, Bündel- und Teilnehmeranschlussdaten. Dabei ist es wichtig, dass diese Daten jederzeit während des Betriebs einer Anlage eingerichtet, modifiziert oder gelöscht werden können. Die Wartung hingegen hat zum Ziel, durch gezielte Prüfungen die Funktionsfähigkeit einer Anlage aufrechtzuerhalten sowie die Betriebsgüte der vermittlungstechnischen Abläufe sicherzustellen. Das Bedien- und Wartungspersonal muss daher die Möglichkeit haben, über einen Bedienplatz als Mensch-Maschine-Schnittstelle mit den betreffenden Einrichtungen der Fernmeldeanlage kommunizieren zu können, wobei für den Dialog mit den Bedien- und Wartungsprogrammen in der Regel in einer anwendungsorientierten Kommandosprache (z.B. CCITT-MML=CCITT-Man Machine Language) erstellte Bedienprozeduren vorgegeben sind. Die Bedienung und Wartung kann dabei für Vermittlungsanlagen einzeln oder aber zentralisiert für mehrere Vermittlungsanlagen erfolgen.

Bisherige Einrichtungen für die Bedienung und Wartung von Fernmeldeanlagen erfordern eine umfangreiche Dokumentation, die sich in einer Vielzahl von Handbüchern niederschlägt. Deren Inhalt besteht in der Regel aus Beschreibungen der erlaubten Kommandos an die Anlage, der erlaubten Reaktionen von der Anlage sowie der Bedienprozeduren. Letztere legen fest, wie die einzelnen Bedien- und Wartungsaufgaben, bestehend aus Folgen oder Kombinationen von Kommandos, unter gleichzeitiger Berücksichtigung der Reaktionen abgewickelt werden müssen. Die Pflege, d.h. die ständige Aktualisierung der Dokumentation kann sehr aufwendig werden, da bei jeder Aenderung in einer zu bedienenden und zu wartenden Anlage eine manuelle Anpassung der Dokumentation notwendig wird, wobei die Gefahr des Einbringens von Fehlern recht gross ist.

Aus "British Telecommunications Engineerring" 3 (1985) 4, Seiten 277 - 284, ist eine Bedien- und Wartungsanordnung für Vermittlungsanlagen bekannt, die einen Rechner enthält, in welchem die zur Bedienung und Wartung notwendigen Prozeduren gespeichert sind. Diese Anordnung ist in der Lage, die zwischen Bediener und Anlage ausgetauschten Befehle und Nachrichten richtig zu formatieren und umzusetzen. Ferner ist aus " IEEE Transactions on communications", Band COM-30, Nr. 6/Juni 1982, Seiten 1329 - 1336 bekannt, Bedien- und Wartungsprozeduren für Fernmeldeanlagen statt in CCITT-MML gemäss den Regeln von CCITT-SDL darzustellen. Davon ausgehend liegt der vorliegenden Erfindung die Aufgabe zugrunde, eine Lösung zur Bedienung und Wartung von Fernmeldeanlagen anzugeben, die generell, d.h. möglichst unabhängig von der Art der Anlage, einsetzbar ist und die eine einfache Anpassung an geänderte Verhältnisse erlaubt. Dies gelingt mit einer Anordnung, wie sie im Anspruch 1 gekennzeichnet ist. Vorteilhafte Weiterbildungen sind in weiteren Ansprüchen aufgeführt.

Die Erfindung geht von der an sich bekannten Spezifikationssprache SDL/PR aus und benützt diese, um das "Bedien- und Wartungswissen" einer Fernmeldeanlage, das normalerweise in umfangreichen Handbüchern enthalten ist, zu repräsentieren. Die Spezifikationssprache SDL (Specification and Description Language) wurde vor einigen Jahren vom CCITT eingeführt. Diese speziell auf nachrichtentechnische Belange ausgerichtete Sprache geht von der Modellvorstellung einer Anzahl von parallel ablaufenden Prozessen aus, die durch Signale untereinander und mit der Umwelt kommunizieren. Das Verhalten eines Prozesses wird durch seine Zustände bestimmt. Ein eintreffendes Signal kann einen Uebergang vom bestehenden zu einem neuen Zustand auslösen, wobei gegebenenfalls Signale ausgesendet werden. Der Grundgedanke ist im wesentlichen der eines endlichen Automaten, der verschiedene Zustände durchlaufen kann. Ein SDL-Prozess ist ein Objekt, das sich entweder in einem Wartezustand (state) oder in einem Uebergang (transition) befindet. Im Wartezustand wird auf ein Eingangssignal gewartet. Im Uebergang läuft als Folge eines Eingangssignals eine Reihe von Tätigkeiten ab, um von einem Zustand in einen anderen zu gelangen. Für weitere Einzelheiten hiezu wird auf "IEEE Transaction on Communications" Vol. COM-30, Nr. 6, June 1982, Seiten 1310 bis 1317 verwiesen. Die Erfindung wird nachfolgend anhand von Zeichnungen näher erläutert. Dabei zeigt :

Fig. 1 eine prinzipielle Darstellung der erfindungsgemässen Anordnung

Fig. 2 Einzelheiten dieser Anordnung

Fig. 3 die Darstellung einer einfachen Bedienprozedur

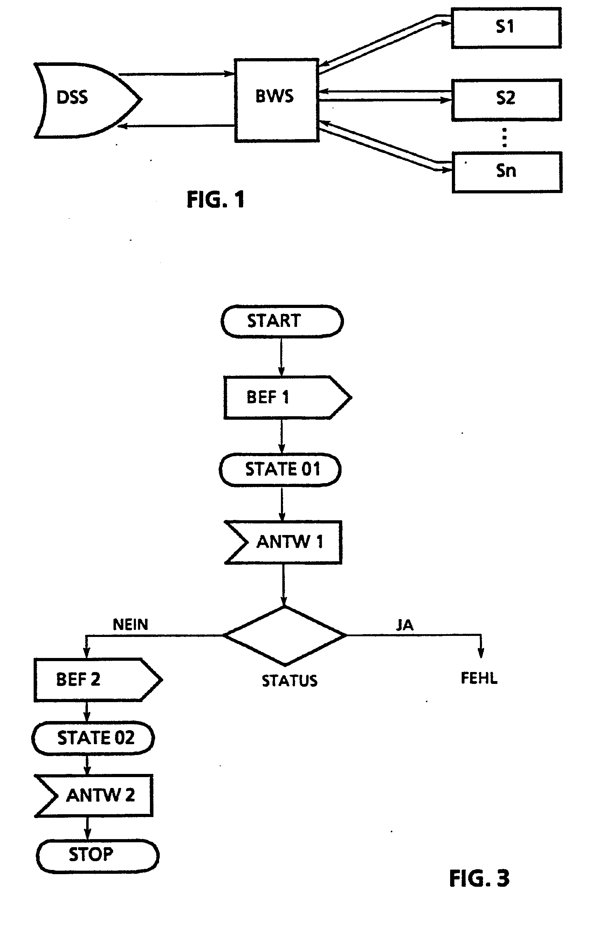

Fig. 1 zeigt einen Bedienungsplatz DSS, beispielsweise ausgestattet mit einem Datensichtgerät, von dem aus in bezüglich der Abläufe für Bedienung und Wartung verschiedenartige Fernmeldeanlagen S 1,S2...Sn zwecks Bedienung und Wartung eingegriffen werden kann. Zwischen dem Bedienungsplatz DSS und den Anlagen S ist erfindungsgemäss eine Steueranordnung BWS eingefügt. Vom Bedienungsplatz DSS aus ist es möglich, durch Eingabe entsprechender Befehle die gewünschten Bedien- und Wartungsprozeduren in einer der angeschlossenen Anlagen S einzuleiten und ihren Ablauf zu steuern. Dadurch in der Anlage S hervorgerufene Reaktionen gelangen zur Steueranordnung BWS und erforderlichenfalls als Aufforderungen zum Bedienungsplatz DSS. Sowohl für die von der Bedienperson zur Steueranordnung BWS geschickten Befehle als auch für die von der Steueranordnung BWS zum Bedienungsplatz DSS gelangenden Bedienaufforderungen wird vorzugsweise die von CCITT normierte Sprache MML (Man Machine Language) verwendet. Ebenso wird sowohl für die von der Steueranordnung BWS zur Anlage S übertragenen Befehle als auch für die umgekehrt von der Anlage S zur Steueranordnung BWS gelangenden Anlagereaktionen CCITT-MML vorzugsweise benützt.

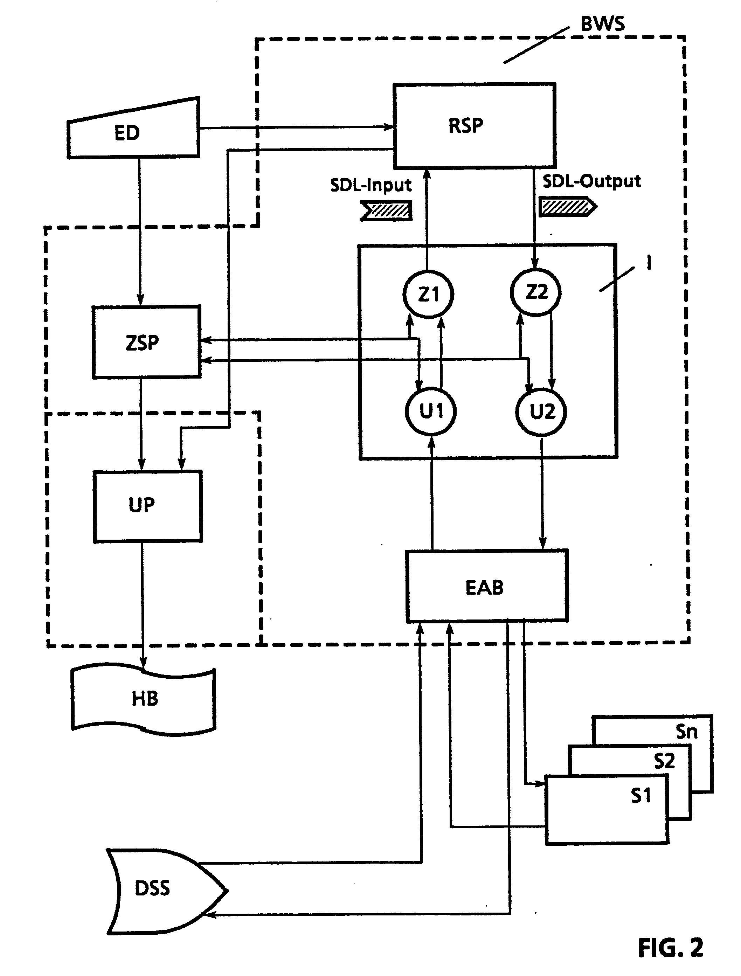

Fig. 2 zeigt Einzelheiten zum Konzept der zwischen dem Bedienungsplatz DSS und einer oder mehreren Vermittlungsanlagen S1...Sn eingefügten Steueranordnung BWS. Die Steueranordnung BWS weist einen nicht gezeichneten Prozessor auf, der die Steuerung aller im folgenden beschriebenen Abläufe übernimmt. Neben dem Prozessor enthält die Steueranordnung BWS eine Ein-/Ausgabe-Einheit EAB, welche die Schnittstelle einerseits zum Bedienungsplatz DSS und andererseits zur Anlage S bildet. Diese Schnittstelle übernimmt in Zusammenarbeit mit dem Prozessor auch die Steuerung der Funktion an der Bedienoberfläche. Weiter enthält die Steueranordnung BWS einen Uebersetzer I sowie einen Speicher RSP, in welchem das für die Bedienung und Wartung einer oder mehrerer angeschlossener Anlagen S notwendige "Wissen" in Form der eingangs erwähnten SDL-Spezifikationssprache festgehalten ist, und zwar in der sogenannten prozeduralen Version SDL/PR. Sämtliche Bedien- und Wartungsprozeduren, d.h. Sequenzen von CCITT MML-Befehlen und -Reaktionen, sind nach den Regeln von CCITT-SDL/PR in Prozesse mit 'states' und 'transitions' repräsentiert und im Speicher RSP abgelegt. Dabei werden alle Befehle bzw. Reaktionen innerhalb dieser Prozeduren als SDL-Signale betrachtet. Der Speicher RSP beinhaltet also den Ablauf aller im Rahmen der Bedienung und Wartung aufrufbaren Prozeduren, die der Bedienperson die gewünschten Eingriffe in die angeschlossene Vermittlungsanlage S ermöglichen, und zwar ohne ein Bedien- oder Wartungshandbuch benützen zu müssen, in denen die einzelnen Bedienungsschritte vorgegeben sind. Somit ist eine "papierlose" Bedienung und Wartung der angeschlossenen Anlage S möglich. Die Steueranordnung BWS hat Zugriff zu einem Zuordnungsspeicher ZSP, auf dessen Funktion nachstehend noch eingegangen wird. Dieser Zuordnungsspeicher ZSP ist in der Steueranordnung BWS enthalten.

Die grundsätzlichen Abläufe bei der Bedienung und Wartung mit dieser Anordnung werden nun erläutert. Als Signale im Sinne der CCITT-Beschreibungssprache SDL/PR gelten einerseits die innerhalb einer Prozedur an die angeschlossene Anlage S oder an den Bedienungsplatz DSS (Bedieneraufforderungen) abgegebenen Befehle sowie andererseits die von der Anlage S und die vom Bedienungsplatz DSS (Bedienerantworten) abgegebenen Reaktionen. Erstere werden im folgenden auch als SDL-Ausgangssignale, letztere als SDL-Eingangssignale bezeichnet.

Wenn der Prozessor der Steueranordnung BWS als Folge einer Eingabe am Bedienungsplatz DSS oder bedingt durch einen automatisch erfolgenden Ablaufschritt - beispielsweise ausgelöst durch den Ablauf eines Zeitgliedes - aus dem Speicher RSP die Anweisung erhält, die Abgabe eines SDL-Ausgangssignals, d.h. eines bestimmten Befehls, an die Anlage S zu veranlassen, wird dieser Befehl aufgrund von Angaben im Zuordnungsspeicher ZSP von Uebersetzer I in einer Bearbeitungsphase Z2 in eine formale Darstellung umgesetzt, die sämtliche Informationen enthält, welche zur Ausführung des entsprechenden MML-Befehls in der betreffenden Anlage S notwendig sind. Im Zuordnungsspeicher ZSP sind alle möglichen SDL-Ausgangssignale definiert, d.h. für jedes SDL-Ausgangssignal ist in einer formalen Darstellung die Struktur des entsprechenden MML-Befehls mit den Parametern und Wertebereichen festgelegt, die zur Durchführung der diesem SDL-Ausgangssignal entsprechenden Abläufe in der Anlage S erforderlich sind.

Die Struktur eines MML-Befehls kann in Anlehnung an die CCITT-MML-Regeln beispielsweise wie folgt aussehen :

EINRICHTEN LEITUNG : LTGNR=10, SIGART=MFC ;

Der Befehlskopf besteht aus der Tätigkeit "EINRICHTEN" und dem Objekt "LEITUNG".Die Werte "10" und "MFC" sind die Werte der beiden im vorliegendem Fall relevanten Parameter "Leitungsnummer" LTGNR und "Signalisierart" SIGART, welche diese innerhalb vorgegebener Wertebereiche einnehmen können. Normalerweise sind die Wertebereiche verschieden für unterschiedliche Befehle und Parameter. Die Struktur der MML-Befehle sowie ihrer Parameter und Wertebereiche ist abhängig von der Art der jeweils angeschlossenen Fernmeldeanlage.

Ferner enthält der Zuordnungsspeicher ZSP auch die Definitionen, die notwendig sind, um umgekehrt sämtliche von der angeschlossenen Anlage S oder vom Bedienungsplatz DSS abgegebenen Reaktionen in das entsprechende SDL-Eingangssignal umsetzen zu können. Zusammen mit dem Inhalt des Speichers RSP bildet somit die formale Beschreibung aller Befehle und Reaktionen im Zuordnungsspeicher ZSP das gesamte zur Durchführung der Bedien- und Wartungsprozeduren in der angeschlossenen Anlage S notwendige "Wissen". Dabei ist es besonders vorteilhaft, dass die Inhalte des Speichers RSP und des Zuordnungsspeichers ZSP unabhängig voneinander an die jeweiligen Erfordernisse angepasst werden können. Anlagenindividuelle Bedien- und Wartungsprozeduren können durch entsprechende Anpassungen der im Speicher RSP enthaltenen Informationen berücksichtigt werden, während anlagenindividuelle Strukturen von in die Anlage S einzugebenden MML-Bedien- und Wartungskommandos oder von aus der Anlage S stammenden Reaktionen durch entsprechende Definitionen im Zuordnungsspeicher ZSP angepasst werden können. Alle diese Aenderungen und Anpassungen können über einen Editor ED vorgenommen werden. Dieses Vorgehen ermöglicht in besonders vorteilhafter Weise eine weitgehend systemunabhängige, d.h. eine auf bezüglich Bedienung und Wartung völlig verschiedenartige Vermittlungsanlagen generell anwendbare Bedienung und Wartung, beispielsweise für alle nach den Regeln von CCITT-MML arbeitende Anlagen.

Sobald nun der gemäss obiger Annahme an die Anlage S abzugebende Befehl aufgrund der Angaben im Zuordnungsspeicher ZSP spezifiziert ist, wird er vom Uebersetzer I in einer Bearbeitungsphase U2 aufbereitet, falls erforderlich mit den fehlenden Parametern ergänzt, geprüft und dann in MML-Form umgesetzt und der Anlage S zugeführt, wo demzufolge die entsprechenden Vorgänge ausgelöst werden. In gleicher Weise wird auch ein z.B. als Folge einer Reaktion der Anlage S eine Aufforderung an den Bedienungsplatz DSS beinhaltendes SDL-Ausgangssignal behandelt und schliesslich zum Bedienungsplatz DSS übertragen, wo es in einer für den Bediener verständlichen Darstellung (Schriftzeichen, Grafik u.a.) sichtbar gemacht wird.

Eine weitere Anweisung im Speicher RSP kann darin bestehen, ein SDL-Eingangssignal, d.h. beispielsweise eine als Folge des zuvor übermittelten MML-Befehls erforderliche Reaktion von der Anlage S abzuwarten. Wenn diese Reaktion in MML-Form von der Anlage S eintrifft, wird sie vom Uebersetzer I in einer Bearbeitungsphase U1 in die formale Darstellung umgesetzt, aus der ihr anschliessend aufgrund der Definitionen im Zuordnungsspeicher ZSP in einer weiteren Bearbeitungsphase Z1 ein SDL-Eingangssignal mit allen Daten, die die Reaktion enthält, zugeordnet werden kann. Der Prozessor kann dann aufgrund dieses SDL-Eingangssignals feststellen, um was für eine Reaktion es sich handelt und dementsprechend mit der weiteren Abarbeitung der Anweisungen im Speicher RSP fortfahren. In gleicher Weise werden auch Reaktionen des Bedieners behandelt.

Die Aufgaben des Uebersetzers I lassen sich kurz wie folgt zusammenfassen :

Eine von der Anlage S oder vom Bedienungsplatz DSS stammende Reaktion in MML wird in einer ersten Bearbeitungsphase U1 in die formale Darstellung umgesetzt und der Reaktion mit Hilfe der Definitionen im Zuordnungsspeicher ZSP in der anschliessenden Bearbeitungsphase Z1 das entsprechende SDL-Eingangssignal zugeordnet. Einem an die Anlage S oder an die Bedienungsstation DSS abzugebenden Befehl wird in einer Bearbeitungsphase Z2 ebenfalls mit Hilfe der Definitionen im Zuordnungsspeicher ZSP die entsprechende formale Darstellung zugeordnet, welche dann in der anschliessenden Bearbeitungsphase U2 in MML umgesetzt, evtl. ergänzt, geprüft und der Anlage S bzw. dem Bedienungsplatz DSS zugeführt wird. Selbstverständlich ist für die Kommunikation zwischen dem Bediener und der Anlage S auch eine andere Sprache als MML denkbar ; in diesem Fall sind lediglich die entsprechenden Bearbeitungsphasen U1, U2, in denen die Umsetzung stattfindet, den jeweiligen Gegebenheiten anzupassen. Die formalen Definitionen der Befehle im Zuordnungsspeicher ZSP legen die Regeln für die Bildung von MML-Befehlen an die angeschlossenen Anlagen S fest ; z.B. die Parameter eines Befehls und deren Anordnung innerhalb des Befehls. Analog dazu ist im Zuordnungsspeicher ZSP auch die Struktur der von der Anlage S erwarteten Reaktionen formal beschrieben. Weitere Komponenten des SDL-Modells, wie Tasks, Decisions u.a. übernehmen die ihnen von CCITT zugedachte Aufgabe der Steuerung des Ablaufs von Bedien- und Wartungsprozeduren.

Ein Beispiel soll die vorstehenden Ausführungen verdeutlichen. Dem Beispiel liegt eine vereinfachte Bedienungsprozedur mit der Bezeichnung "Leitung einrichten" zugrunde, deren Ablauf in Fig. 3 dargestellt ist und die im Klartext wie folgt umschrieben werden kann :

Für die zu bedienende Anlage ist eine Bedienungsprozedur "Leitung einrichten" einzuleiten. Der erste Befehl BEF1 "Leitung vorhanden ?" dieser Prozedure dient der Prüfung, ob eine gleiche Leitung schon vorhanden ist oder nicht. Nach Eingabe des Befehls muss also auf eine entsprechende Antwort gewartet werden. Dies geschieht im Wartezustand STATE 01. Ist der Parameter STATUS der eintreffenden Antwort ANTW1 positiv, d.h. die gewünschte Leitung ist schon eingerichtet, wird auf einen Fehler erkannt und der Bediener mit einem entsprechenden Hinweis FEHL am Bedienungsplatz darauf aufmerksam gemacht. Ist der Parameter STATUS der Antwort ANTW1 hingegen negativ, folgt der Befehl BEF2 "Leitung einrichten", der das eigentliche Einrichten der gewünschten Leitung beinhaltet. Sobald die Leitung eingerichtet ist, erfolgt die Antwort ANTW2 und mit entsprechender Rückmeldung zum Bedienplatz wird die Prozedur beendet.

Die Darstellung der vereinfachten Bedienprozedur "Leitung einrichten" im Speicher RSP kann gemäss SDL/PR-Darstellung wie folgt aussehen : (Die zwischen * gesetzten Anmerkungen gehören nicht zur gespeicherten Prozedur, sie dienen lediglich zur Erläuterung.)

```
Process  LTGEINRICHTEN;                          *Einrichten einer Leitung *
Signalset  ANTW1, . . . .;
Start;
Output  BEF1 (LTGNR:=Leitungsnummer);            * Test, ob Leitung mit der
                                                 bestimmten Leitungsnummer
                                                 schon  existiert;  d.h.  die
                                                 Leitungsdaten  müssen  mit
                                                 einem  Befehl  BEF1  in  der
                                                 angeschlossenen   Anlage
                                                 abgefragt werden *
State  State01;                                  *Antwort der Anlage ab-
                                                 warten*
Input  ANTW1 (STATUS:);                          *Wert des Parameters
Decision  (STATUS);                              STATUS (JA,NEIN)
                                                 ermitteln*
(JA):  Output  FEHL ( . . . . ); Stop;           * Leitung existiert schon,
                                                 d.h.     Fehler-Signal    an
                                                 Bedienungsplatz *
(NEIN):  Output  BEF2 (LTGNR:=Leitungsnummer,    * Leitung noch nicht vor-
         LTGART:=Art,                            handen, sie kann mit einem
         SIGART:=Signalisierverfahren, etc.);    Befehl BEF2 an die ange-
                                                 schlossene  Anlage  einge-
                                                 richtet werden *
State  State 02;                                 *Antwort der Anlage ab-
                                                 warten, Daten der Antwort
                                                 bearbeiten etc. *
Input  ANTW2, . . . . . .
End decision;
End process;                                     * Leitung eingerichtet *
```

Die formale Darstellung eines Teils der für die Bedienprozedur "Leitung einrichten" notwendigen Definitionen im Zuordnungsspeicher ZSP sieht wie folgt aus :

```
def  wb1(Leitungsnummer;1...255)                    *Definition der Wertebereiche *

def  wb2(Signalisierungsverfahren;MFC,IW etc.)

def  wb3(Zustand; JA, NEIN)

def  wb4(Art; KOMMEND, GEHEND)


def  BEF1(seq LTGNR(Leitungsnummer))               *Definition des Befehls zur Ab-
                                                    frage, ob Leitung mit be-
                                                    stimmter Nummer schon vor-
                                                    handen ist. Der Befehl besteht
                                                    aus einem einzigen Parameter
                                                    LTGNR*


def  BEF2 (seq LTGNR (Leitungsnummer),             *Definition für den Befehl zum
     LTGART (Art),SIGART                            Einrichten einer Leitung. Der
     (Signalisierungsverfahren));                  Befehl besteht aus einer
                                                    Sequenz der Parameter LTG-
                                                    NR, LTGART, SIGART mit den
                                                    jeweiligen Wertebereichen für
                                                    Leitungsnummer, Leitungsart
                                                    und Signalisierart*


def  ANTW1 (seq STATUS (Zustand));                 *Definition der Antwort auf den
                                                    Befehl "Leitung schon vor-
                                                    handen?" Die Antwort besteht
                                                    aus einem einzigen Parameter
                                                    STATUS mit Wertebereich Zu-
                                                    stand.*


etc.
```

Die in Fig. 2 gezeigte Steueranordnung BWS lässt sicht in einfacher Weise in einem Kleinrechner, wie z.B. einem Personal Computer realisieren, wobei die beiden Speicher ZSP, RSP im Rechner enthalten sind. Dadurch wird das "Bedien- und Wartungswissen" transportabel und somit auf verschiedenen Rechnern interpretierbar. Es kann durch den Betreiber einer Vermittlungsanlage leicht den jeweiligen Bedürfnissen angepasst werden, indem er die jeweils benötigten Bedien- und Wartungsprozeduren nach den Regeln von CCITT-SDL/PR festlegen und den Inhalt des Zuordnungsspeichers ZSP entsprechend bestimmen kann. Es ist auch denkbar, die Prozeduren von bezüglich Bedienung und Wartung voneinander abweichenden Fernmeldeanlagen in ein und demselben Rechner festzuhalten und diese Anlagen von einem einzigen Bedienungsplatz aus ohne Handbücher zu bedienen bzw. zu warten.

Die Anwendung der erfindungsgemässen Anordnung ist nicht auf den Fall der "papierlosen" Bedienung und Wartung von Fernmeldeanlagen beschränkt. Die in der Steueranordnung BWS gespeicherten Bedien- und Wartungsinformationen (Inhalt des Zuordnungsspeichers ZSP und des Speichers RSP) lassen sich auch zur Erzeugung von Bedien- und Wartungsunterlagen in Form von Handbüchern HB heranziehen, indem sie rechnergesteuert mittels eines Umsetzprogrammes UP automatisch in eine für die Bedienperson verständliche Darstellung konvertiert und über einen Drucker auf Papier ausgegeben werden. Dabei ist es durch Einsatz entsprechender Umsetzerprogramme UP ohne weiteres möglich, auch Versionen in verschiedenen Sprachen zu erzeugen. Damit ist gewährleistet, dass im Bedarfsfall auch eine konventionelle Bedienung und Wartung mit Handbüchern möglich ist. Die Steueranordnung BWS kann in verschiedenartigen Rechern realisiert werden, indem der Uebersetzer I und die Ein-/Ausgabeeinheit EAB entsprechend angepasst werden, ohne dass das einmal gespeicherte "Bedien- und Wartungswissen" in den Speichern ZSP, RSP geändert werden muss.

**Ansprüche**

1. Anordnung zur Abwicklung von Bedien- und Wartungsprozeduren in einer programmgesteuerten Fernmelde-, insbesondere Fernsprechvermittlungsanlage, bei der die gewünschten Prozeduren über einen Bedienungsplatz (DSS) eingeleitet werden, wobei vom Bediener stammende Reaktionen als Befehle an die Vermittlungsanlage (S) und Reaktionen der Vermittlungsanlage (S) als Befehle an den Bedienungsplatz (DSS) übertragen werden, mit einer zwischen dem Bedienungsplatz (DSS) und der Vermittlungsanlage (S) eingefügten und einen Prozessor aufweisenden Steueranordnung (BWS), in der Bedienund Wartungsinformationen der Anlage (S) gespeichert sind und die mittels eines Übersetzers (I) die Umsetzung und Formatierung der zwischen Bedienungsplatz (DSS) und Anlage (S) ausgetauschten Informationen vornimmt, **dadurch gekennzeichnet** , dass die Bedien- und Wartungsinformationen anlagenindividuell in zwei Speichern, nämlich in einem Prozedur- (RSP) und in einem Zuordnungsspeicher (ZSP) gespeichert sind, deren Inhalte zur anlagenindividuellen Anpassung unabhängig voneinander über einen Editor (ED) veränderbar sind, wobei im Prozedur-Speicher (RSP) anlagenindividuelle Bedien- und Wartungsprozeduren in an sich bekannter Weise nach den Regeln der CCITT-SDL/PR-Darstellung enthalten sind und wobei im Zuordnungsspeicher (ZSP) anlagenindividuell die zur Umsetzung von SDL/PR-Ausgangssignalen in Befehle an die Anlage (S) bzw. an den Bedienungsplatz (DSS) und die zur Umsetzung der vom Bedienungsplatz (DSS) bzw. von der Anlage (S) abgegebenen Reaktionen in SDL/PR-Eingangssignale notwendigen Informationen enthalten sind, und dass der Übersetzer(I) zur Umsetzung der Reaktionen in SDLPR-Eingangssignale und der SDL/PR-Ausgangssignale in Befehle einerseits zwischen dem Bedienungsplatz (DSS) und dem Prozedurspeicher (RSP) und andererseits zwischen dem Prozedurspeicher (RSP) und der Anlage (S) mit Zugriffsmöglichkeit auf den Zuordnungsspeicher (ZSP) eingefügt ist.

2. Anordnung nach Anspruch 1, **dadurch gekennzeichnet**, dass die Steueranordnung (BWS) mit dem Speicher (RSP) und dem Zuordnungsspeicher (ZSP) in einem Personal Computer realisiert ist, wobei die genannten Speicher (RSP, ZSP) vom Bediener mit Hilfe einer formalen Sprache frei programmierbar sind.

3. Anordnung nach Anspruch 1 oder 2, **dadurch gekennzeichnet**, dass die Steueranordnung (BWS) Zugriff zu einem Umsetzerprogramm (UP) hat, welches für die Umsetzung der in den beiden genannten Speichern (RSP, ZSP) enthaltenen Informationen in eine Darstellung ausgelegt ist, welche die automatische Erstellung von die betreffenden Bedien- und Wartungsprozeduren enthaltenden Handbüchern (HB) zulässt.

**Claims**

1. An arrangement for the control of service and maintenance procedures in a program-controlled telecommunications system, in particular a telephone-exchange unit, in which the desired procedures are initiated by way of an operator console (DSS), whereby reactions coming from the operator are transmitted as commands to the exchange unit (S) and reactions from the exchange unit (S) as commands to the operator console (DSS), with a control arrangement (BWS) having a processor inserted between the operator console (DSS) and the exchange unit (S), in which arrangement service and maintenance information is stored for the unit (S) and which, by means of a converter (I), carries out the conversion and formatting of the information exchanged between operator console (DSS) and unit (S), characterised in that the service and maintenance information is stored individually to the unit in two memories, namely in a procedure memory(RSP) and in a coordination memory (ZSP), the contents of which are able to be altered for adaptation individual to the unit, independently of each other, by way of an editor (ED), wherein in the procedure memory (RSP) service and maintenance procedures individual to the unit are contained in a known manner, according to the rules of CCITT-SDL/PR representation, and wherein in the coordination memory (ZSP) there is contained individually to the unit, the information necessary for converting SDL/PR output signals into commands to the unit (S) or to the operator console (DSS) and for converting the reactions given

7

by the operator console (DSS) or the unit (S) into SDL/PR input signals, and in that the converter (I) is inserted for converting the reactions into SDL/PR input signals and the SDL/PR output signals into commands, on the one hand between the operator console (DSS) and the procedure memory (RSP) and, on the other hand, between the procedure memory (RSP) and the unit (S) with the possibility of access to the coordination memory (ZSP).

2. An arrangement according to claim 1, characterised in that the control arrangement (BWS) with the memory (RSP) and the coordination memory (ZSP) is realised in a Personal Computer, wherein the named memories (RSP, ZSP) are freely programable by the operator with the aid of a formal language.

3. An arrangement according to claim 1 or 2, characterised in that the control arrangement (BWS) has access to a converter program (UP), which is designed for the conversion of the information contained in both named memories (RSP, ZSP) into a representation, which allows the automatic creation of the relevant manuals (HB) containing service and maintenance procedures.

## Revendications

1. Dispositif pour l'exécution de procédures de commande et de maintenance dans une installation de télécommunications, notamment un central téléphonique, commandé par programme, dans lequel les procédures désirées sont introduites par l'intermédiaire d'un poste de commande (DSS), et dans lequel les réactions émanant de l'utilisateur sont transmises en tant qu'instructions à l'installation de commutation (S), et les réactions de l'installation (S) sont transmises en tant qu'instructions au poste de commande (DSS), et comportant un dispositif de commande (BWS) monté entre le poste de commande (DSS) et l'installation (S) et possédant un processeur, dans lequel des informations de commande et des informations de maintenance de l'installation (S) sont mémorisées et qui réalise, à l'aide d'un convertisseur (1), la conversion et le formatage des informations échangées entre le poste de commande (DSS) et l'installation (S), caractérisé par le fait que les informations de commande et de maintenance sont mémorisées, individuellement pour chaque installation, dans deux mémoires, à savoir une mémoire de procédures (RSP) et une mémoire d'adjonction (ZSP), dont les contenus peuvent être modifiés indépendamment l'une de l'autre, par l'intermédiaire d'un éditeur (ED) pour l'obtention d'une adaptation pour chaque installation, auquel cas, la mémoire de procédures (RSP) contient, de façon connue en soi, des procédures de commande et de maintenance qui sont prévues individuellement pour chaque installation, confor mément aux règles de la représentation CCITT-SDL/PR, et la mémoire d'adjonction (ZSP) contient, pour chaque installation, les informations nécessaires pour la conversion de signaux de sortie SDL/PR en des instructions appliquées à l'installation (S) ou au poste de commande (DSS) et les informations nécessaires pour la conversion des réactions délivrées par le poste de commande (DSS) ou par l'installation (S) en des signaux d'entrée SDL/PR, et que le convertisseur (1) est inséré pour réaliser la conversion des réactions en des signaux d'entrée SDL/PR et la conversion des signaux de sortie SDL/PR en des instructions d'une part entre le poste de commande (DSS) et la mémoire de procédures (RSP) et d'autre part entre la mémoire de procédures (RSP) et l'installation (S), avec une possibilité d'accès à la mémoire d'adjonction (ZSP).

2. Dispositif suivant la revendication 1, caractérisé par le fait que le dispositif de commande (BWS), y compris la mémoire (RSP) et la mémoire d'adjonction (ZSP), est formé en un ordinateur personnel (PC), lesdites mémoires (RSP, ZSP) étant librement programmables par l'utilisateur, à l'aide d'une langue formelle.

3. Dispositif suivant la revendication 1 ou 2, caractérisé par le fait que le dispositif de commande (BWS) a accès à un programme (UP) de conversion qui est conçu pour réaliser la conversion des informations contenues dans lesdites deux mémoires (RSP, ZSP) en une représentation qui permet la réalisation automatique des manuels (HB) contenant les procédures concernées de commande et de maintenance.

**FIG. 1**

**FIG. 3**

9

**FIG. 2**